# EUROPÄISCHE PATENTANMELDUNG

(11) **EP 2 839 938 A1**
(43) Veröffentlichungstag der Anmeldung: **25.02.2015**
(21) Anmeldenummer: 14455004.3
(22) Anmeldetag: 17.07.2014
(51) Int. Cl.: B27B 5/22

(54) **Vorrichtung zum Schneiden von Holz**

(30) Priorität: 29.07.2013 AT 504762013
(71) Anmelder: Posch Gesellschaft m.b.H., 8430 Leibnitz/Kaindorf (AT)
(72) Erfinder: Reiter, Erwin, 8430 Tillmitsch (AT)
(74) Vertreter: Wildhack & Jellinek

(57) **Zusammenfassung**

Die Erfindung betrifft eine Vorrichtung zum Schneiden von länglichem Holz (2), in Holzstücke (2') definierter Länge (I).

Erfindungsgemäß ist vorgesehen, dass sie eine mittels Antriebseinheit (55) horizontal quer oszillierend bewegbare Einheit (4, 5) von Holzzuführung (4) und Holzverschiebelade (5) - für einen Schwerkraft-Vorschub der Hölzer (2) bis zu deren Längsanschlag (51) aufweist, welche in Zufuhrrichtung (R2) der Hölzer schräg zur Horizontale H angeordnet ist, wobei die Schneidebene (30) der Sägeeinheit (3) senkrecht hierzu positioniert sind, und dass der für die Längeneinstellung der Holzstücke (2') verstellbare Längsanschlag (51) fix mit einem die Anwesenheit von Holz in der Verschiebelade (5) erkennenden Sensor (7) gekoppelt ist, der mit einer Steuerungseinrichtung (8) für die Antriebseinheit der Verschiebelade verbunden ist, mittels welcher bei Vorhandensein von Holz, dieselbe zuerst senkrecht zur Schneidebene (30) des Sägeblatts (31) horizontal in Richtung (r1) auf das Sägeblatt hin und nach erfolgtem Schnitt in Gegenrichtung (r2) zur Ausgangsposition (Au) bewegbar ist, und dies horizontal oszillierend so lange, bis bei Leerstand der Lade dieselbe nach (Au) zurückbewegbar ist.

## Beschreibung

Die Erfindung betrifft eine neue Vorrichtung zum Schneiden von länglichem Holz, insbesondere von Stamm-, Ast-, Scheit- oder Rundholz, in Holzstücke jeweils definierter Länge.

Es gibt bereits automatische Brennholzsägen, welche die Grundaufgabe, längliche Hölzer zu Holzstücken mit jeweils gewünschter Endlänge, z.B. für die Beschickung von Öfen, abzulängen, erfüllen.

Schneidvorrichtungen für Holz sind in vielfältigen Ausführungsvarianten bekannt geworden. So sind beispielsweise Vorrichtungen bekannt, bei denen Baumstämme längs zu rotierenden Kreissägeblättern hin bewegt und in Längsrichtung zu Brettern geschnitten werden.

Weiters sind Maschinen bekannt geworden, bei denen Baumstämme quer zur späteren Schnittebene bewegt werden, wo sie von einer beweglichen Sägeeinheit, insbesondere einer Kreissäge, durch oszillierende Bewegungen des Sägeblatts verschnitten werden. Diese Ausführungsform hat den Nachteil, dass das bewegliche Sägeblatt aufgrund des Trägheitsmomentes des rotierenden Sägeblattes technisch relativ aufwendig zu realisieren ist.

Eine manuelle Variante, bei der Holzstücke von Hand in eine Wippkreissäge oder auf den Tisch einer Rolltischsäge eingelegt werden und der Schneidevorgang von der Bedienperson ausgelöst wird, ist ebenfalls bekannt geworden. Nach dem Schneidvorgang wird das Holz in der jeweils gewünschten Holzlänge vorgeschoben und abgelängt. Hiezu sind allerdings zwei Bedienpersonen nötig. Eine legt das Holz ein und die zweite Person längt die Holzscheite ab, schiebt sie weiter und verlädt die abgelängten Holzstücke.

Die EP 1 529 611 B1 beschreibt eine automatische Schneidevorrichtung für Holz, umfassend eine Sägeeinheit, welche an derselben ortsfest befestigt ist und eine Zuführeinrichtung für das Holz, welche dasselbe senkrecht zur Schneidebene der Sägeeinheit in Richtung von deren Schneidebene fördert, wobei dort die Transportvorrichtung von der Sägeeinheit räumlich beabstandet ist und die Verschiebelade parallel zur Schneidebene in den Schneidbereich der Sägeeinheit hinein und aus derselben zurück bewegbar ist, und wobei dort die Transportvorrichtung, die Zufuhrzone und der Schneidbereich in einer gemeinsamen, horizontalen Ebene liegen.

Die DE 29607119 U1 beschreibt eine Vorrichtung zum Sägen von vorgespaltenem Scheit- oder Rundholz mit einer Kreissäge, bei welcher das Holz mittels einer Trommel dem Sägeblatt zugeführt wird und wobei die Sägetrommel mit 30 bis 70° Neigung schräg angeordnet ist, damit das Holz durch die Schwerkraft und durch die Drehbewegung der Trommel abwärts rutscht, wobei dort ein verstellbares Bodenblech als Längsanschlag dient.

Die GB 2236707 A und die DE 29607119 U1 offenbaren Trommelsägen zum Ablängen von Meterholz. Gemäß GB-A ist die Trommel vertikal und gemäß DE-U1 in spitzem Winkel zur Horizontalen ausgerichtet. Das Sägeblatt ist jeweils senkrecht zur Längsausrichtung der Trommel und somit auch zum Schnittholz ausgerichtet. Der Abtransport der abgelängten Holzstücke erfolgt über ein Förderband.

Die US 3051207 A zeigt eine automatische Schneidevorrichtung, insbesondere zum Schneiden von Lebensmitteln. Das Schneidgut wird auf einer geneigten Schneidgutauflage abgelegt, wobei es aufgrund der Schwerkraft bis zu einer Anlagefläche abwärts gleitet. Die Schneidgutaufnahme ist horizontal, senkrecht zur Längsausdehnung des Schneidgutes hin und her verschiebbar gelagert und mittels Motor angetrieben. In einer zur Ebene der Schneidgutauflage senkrechten Ebene ist ein Rundmesser angeordnet. Bei jedem Vorhub in Richtung des Rundmessers wird ein Stück des Schneidgutes abgeschnitten, beim Rückhub gleitet das verbleibende Schneidgut wieder bis zur Anlagefläche hin. Dieser Schneidvorgang wiederholt sich periodisch.

Abrundend ist zum Stand der Technik noch auf folgende Internet-Veröffentlichung hinzuweisen:
GROWI MASCHINENBAU: "HANNIBAL Hochleistungssäge"
http://www.growi-maschinenbau.de/show.php?pageID=2 (20.02.2014)

Diese Veröffentlichung zeigt einen Sägeautomaten mit einer in einem Winkel zur Horizontalen ausgerichteten Schneidgutaufnahme. Das zu sägende Holz wird in die Schneidgutaufnahme eingelegt, wobei es aufgrund der Schwerkraft nach unten gleitet, bis es auf einen (verstellbaren) Anschlag trifft. Die schwenkbar am oberen Ende gelagerte Schneidgutaufnahme wird im unteren Bereich mittels einer Kurvenscheibe in Richtung eines Sägeblattes angehoben und wieder gesenkt, wobei beim Aufwärtshub ein Stück definierter Länge vom Schneidgut abgelängt wird und am Ende des Abwärtshubes das verbleibende Schneidgut wieder bis zum Anschlag hinabgleitet. Auch hier wiederholt sich der Schneidvorgang periodisch.

Die bisher bekannt gewordenen Sägen bzw. Schneidvorrichtungen für Hölzer weisen den Nachteil auf, dass bei ihnen die Vorrichtung den Arbeitstakt vorgibt und somit die jeweilige Bedienperson immer wieder oder laufend in eine Stresssituation versetzt. Weiters muss die Bedienperson ständig kontrollieren, ob die Aufgabelade bereits frei ist oder ob noch ein Reststück Holz zur Bearbeitung vorhanden ist.

Zusätzlich erschwert wird die Aufgabe durch Bestimmung des optimalen Aufgabezeitpunktes durch den Bediener und es ist möglich, dass in Folge des zufälligen Aufgabezeitpunktes das abzulängende Holzstück nicht ganz bis zum Längsanschlag der Sägevorrichtung vorgeschoben worden ist und somit nicht erwünschte, unkontrollierte Abschnittlängen produziert werden.

Aufgabe der vorliegenden Erfindung ist es, die Nachteile bisher bekannt gewordener automatischer Holzschneide-Vorrichtungen zu vermeiden und eine konstruktiv einfache und insbesondere einfach und sicher zu bedienende Schneidevorrichtung der eingangs erwähnten Art zu erstellen.

Gegenstand der Erfindung ist eine neue Vorrichtung zum Schneiden von länglichem Holz, insbesondere von Scheit- oder Rundholz, in Holzstücke jeweils definierter Länge, welche eine orts- und lagefest an die Vorrichtung gebundene Sägeeinheit und eine Holzzuführeinheit mit parallel zur Schneidebene der Sägeeinheit oszillierend in deren Schneidbereich hinein und aus demselben heraus bewegbarer Holz-Halte- und - Verschiebelade, und vorzugsweise eine Abtransporteinrichtung für die abgelängten Holzstücke, insbesondere ein Förderband, umfasst, welche dadurch gekennzeichnet ist,
- dass sie eine mittels Antriebseinheit, vorzugsweise Hydraulikzylinder, im Wesentlichen horizontal quer oszillierend bewegbare Einheit von Holz-Zuführung mit an sie angeschlossener, bevorzugter Weise mit derselben einheitlicher, Holz-Halte- und - Verschiebelade - für einen ausschließlich schwerkraftbewirkten Vorschub der Hölzer bis zu einem Längsanschlag derselben - aufweist,
- welche in Längsrichtung der eingebrachten länglichen Hölzer schräg, vorzugsweise in einem Winkel α von 25 bis 50°, insbesondere von 30 bis 40°, zur Horizontale angeordnet ist und die Schneidebene der Sägeeinheit somit im Wesentlichen senkrecht hierzu und zur Holzzufuhr-Längsrichtung positioniert ist, und
dass der für die Einstellung des Ablängmaßes der Holzstücke, vorzugsweise diskontinuierlich, verstellbare Längsanschlag fix mit einem - für die Beladung der Holz-Halte- und -Verschiebelade mit Holz kontrollierenden Sensor gekoppelt ist,
- der seinerseits mit einer Steuerungseinrichtung zumindest für die Antriebseinheit der Holz-Halte- und -Verschiebelade verbunden ist,
- mittels welcher bei (Noch-)Vorhandensein von Holz in der genannten Lade und bei dessen Anliegen an deren Längsanschlag, dieselbe zuerst senkrecht zur Schneidebene der Sägeeinheit und dann im Wesentlichen horizontal in Richtung auf das Sägeblatt der Sägeeinheit zu und nach erfolgtem Schnitt in Gegenrichtung zurück in die Ausgangsposition für das Nachrücken des länglichen Holzes bis zum Längsanschlag für den nächsten Schnittvorgang bewegbar ist, und dies horizontal oszillierend so lange, bis bei vom Sensor registriertem Nicht-Vorhandensein von Holz in der Lade dieselbe in ihre Ausgangsposition zurück bewegbar ist, und die Sägeeinheit gegebenenfalls abschaltbar ist.

Die neue Holzschneidevorrichtung ermöglicht den Ablängvorgang mittels dem sich bewegenden, insbesondere rotierenden, Sägeblatt der relativ zu der genannten Vorrichtung jedoch nicht beweglichen Sägeeinheit und der waagrecht oszillierenden, in Längsrichtung schräg angeordneten Verschiebelade. Der Vorschub des Holzes nach jedem erfolgten Schnittvorgang erfolgt - nach Lösen des Holzhalteelements - automatisch mittels Schwerkraft entlang der schrägen Bahn der Verschiebelade im spitzen Winkel zur Horizontale. Nach jedem Schnitt rutscht das abgelängte Holzstück abwärts auf das Holzstückabtransport-Förderband und wird von demselben abtransportiert.

Das Holzhalteelement der Verschiebelade, welche beispielsweise eine das eingebrachte, längliche Holz in Querrichtung federkraftbeaufschlagende Halterung ist, hält das zu schneidende Holz vor dem es letztlich schneidenden Sägeblatt und während des Schneidevorgangs selbst fest, bis die Lade wieder vollständig zurück in ihrer Ausgangsposition vor dem Sägeblatt zu stehen kommt und lässt das längliche Holz dann wieder frei, bis es mittels Schwerkraft in die an dem Längsanschlag anliegende Schneideposition gerutscht ist.

Die Funktion der im Wesentlichen horizontal oszillierenden Verschiebelade wird vorzugsweise mittels Antrieb mit Hydraulikzylinder sichergestellt.

Die Nachteile der bisher bekannt gewordenen, automatischen Brennholzsägen werden erfindungsgemäß insbesondere durch den innovativ mit dem Sensor ausgestatteten und mit ihm zusammen mitverstellbaren Holz-Längsanschlag beseitigt.

Der neue "intelligente" Längsanschlag mit Sensor für das Holz erfüllt insbesondere folgende Aufgaben:
Der Sägevorgang kann nur bei bzw. mit korrekter, durch die jeweilige Einstellung des Längsanschlags bestimmter Schnittlänge begonnen und ausgeführt werden.

Wenn sich kein Holz (mehr) in der Verschiebelade befindet, wird die Holzlade in die Holzeinlauf- bzw. Aufgabeposition gebracht, bleibt dort stehen und zeigt dem Bediener somit die Möglichkeit einer erneuten Beschickung mit abzulängendem Holz an. Auf diese Weise kann bei der erfindungsgemäßen Holzschneidevorrichtung mit Sensor jegliche Kontrolle der Holzaufgabe für den Bediener komplett entfallen.

Hierbei ist der wesentliche Vorteil gegeben, dass die neue Holzschneidevorrichtung selbst den bestmöglichen Arbeitstakt für die Ablängung der länglichen Holzstücke vorgibt.

Der neue "intelligente" Anschlag mit dem mit ihm fix mitverstellbaren Holzerkennungs-Sensor ist erfindungsgemäß günstiger Weise so ausgeführt, dass der Sensor ein Holzstück als direkt vor dem Längsanschlag liegend und ihn berührend bzw. dort anliegend erkennt und erst dann den dann automatischen Sägevorgang auslöst. Wenn der mechanische Längsanschlag für die Einstellung der Länge der geschnittenen Holzstücke verstellt wird, wird der Sensor zur Holzerkennung automatisch mitverstellt, sodass die Funktionsfähigkeit des Sensors unabhängig von der Holzstücklängen-Einstellung immer erhalten bleibt.

Was die Sägeeinheit der neuen Holzschneide-Vorrichtung selbst betrifft, so kann diese mit einer Kreis- oder Bandsäge, einer Stichsäge, einem Endlossägedraht oder einer Kettensäge, vorzugsweise mit einem Kreissägeblatt, ausgebildet sein.

Die Holzerkennungs-Funktion kann optimaler Weise durch optische Sensoren, also durch solche mit Laser- oder IR-Licht, durch kapazitive Sensoren oder Ultraschallsensoren erfolgen. Eine Lösung mittels mechanischem Kontakt bei Berührung des Holzes am Längsanschlag ist ebenfalls möglich.

Insbesondere zur Verhinderung eines unkontrollierten Abhebens der zugeführten Hölzer zu Beginn und während des Sägevorgangs selbst ist es günstig, wenn die Sägerichtung bzw. Sägewirkung von deren Sägeeinheit, insbesondere des Sägeblatts, von oben nach unten, also nach abwärts hin, verläuft.

Im Hinblick auf einen möglichst flexiblen Einsatz der neuen Holzschneidevorrichtung ist es weiters günstig, wenn sie mittels Dreipunkt an einen Traktor gekoppelt werden kann oder als verfahrbarer Anhänger ausgebildet ist, und der Antrieb der Sägeeinheit beispielsweise mittels der Arbeits- bzw. Gelenkswelle eines Schleppfahrzeugs, insbesondere Traktors, vorgesehen ist. Es ist selbstverständlich auch jede andere Antriebsmöglichkeit, insbesondere über Elekto- oder Verbrennungsmotore (Diesel, Benzin) möglich.

Es liefert also die neue Holzschneidevorrichtung neben optimaler Leistung infolge von der Schneidevorrichtung selbst getakteten automatischen Schnittvorgangs gleichzeitig eine bestmögliche, gleichmäßige Brennholzqualität und ermöglicht gleichzeitig der Bedienungsperson eine einfache Bedienung, wobei Anzeige der die Möglichkeit oder Notwendigkeit einer Langholzaufgabe jedenfalls zumindest durch einen Stillstand der Verschiebelade eindeutig angezeigt wird.

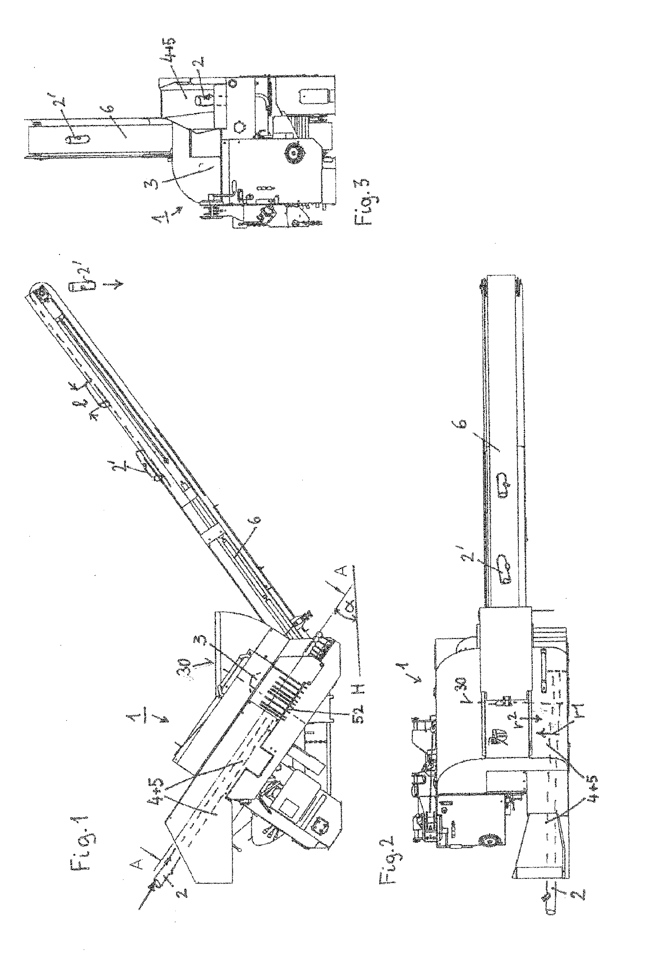

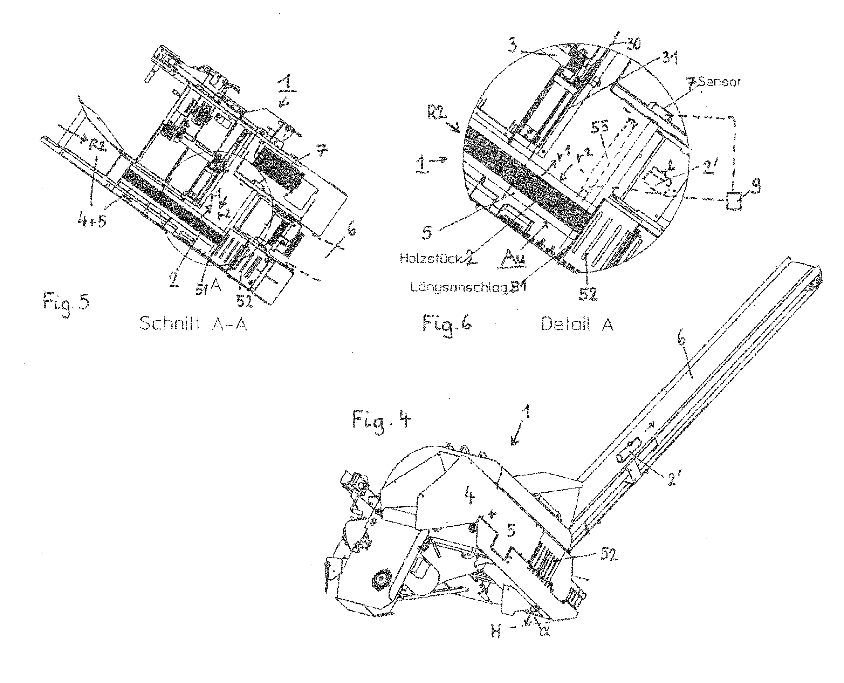

Anhand der Zeichnung wird die Erfindung näher erläutert:
Es zeigen die Fig. 1 bis 4 die neue Holzschneidevorrichtung in Seitenansicht, Draufsicht, in einer Sicht von der Holzaufgabeseite her und in Schrägansicht, und die Fig. 5 und 6 eine Ansicht und eine Detailansicht der neuen Vorrichtung entlang der in der Fig. 1 gezeigten Schnittebene A-A.

Die Fig. 1 zeigt die neue Holzschneidevorrichtung 1 und es ist in der Figur deutlich zu erkennen, wie die - hier eine Einheit bildende - Holzaufgabe- und -einlaufeinrichtung 4 und Holz-Halte- und -Verschiebelade 5 in Holz-Zugabe- und -Längsrichtung R2 im Winkel α von beispielsweise 35° schräg zur Horizontale H angeordnet ist, sodass die dort aufgegebenen, zu schneidenden, länglichen Holzstämme, -äste oder -scheite 2 automatisch entlang der Unterseite der Verschiebelade 5 abwärts rutschen, bis sie an einem hier nicht sichtbaren Längsanschlag derselben anliegen, dessen hier diskontinuierliche Verstellbarkeit auf jeweils gewünschte Längen I der abgesägten Holzstücke 2' anhand von Einstellschlitzen 52, durch welche beim Schnittvorgang beispielsweise der fixe mechanische Längsanschlag 5, z.B. in Form eines Anschlagsbleches, dringen kann, deutlich erkennbar ist. Die Verschiebelade 5 ist in der zur Horizontale H im spitzen Winkel α schrägen, durch A-A definierten Ebene nach hinten, also vom Beschauer weg, und dann wieder nach vorne, also zum Betrachter hin, oszillierend bewegbar.

Im Zuge der Bewegung der Verschiebelade 5 nach hinten gerät das aufgegebene, längliche Holz 2 in die Schneidebene 30 des Kreissägeblatts der Sägeeinheit 3 und es wird dort jeweils ein Holzstück 2' abgelängt, das auf das Förderband 6 fällt und von demselben - hier schräg nach oben - abtransportiert wird und letztlich unter Bildung eines Holzstückhaufens von demselben abgeworfen wird.

Aus der Fig. 2 wird - unter voller Beibehaltung der Bezugszeichenbedeutungen - klar, wie die horizontal-oszillierende Bewegung der Verschiebelade 5 in Richtung r1 und in Gegenrichtung r2 zusammen mit der mit ihr hier einstückigen Holzaufgabe- 3 erfolgt, was mittels diese Oszillationsbewegung charakterisierender, kurzer Pfeile angedeutet ist.

In der Fig. 3 haben die Bezugszeichen die gleichen Bedeutungen wie in den Fig. 1 und 2.

Den Gesamtaufbau der neuen Holzscheide-Vorrichtung 1 zeigt - bei sonst gleichbleibenden Bezugszeichenbedeutungen - die Fig. 4 deutlich.

Die beiden Fig. 5 und 6 zeigen - bei sonst gleichbleibenden Bezugszeichenbedeutungen - das neben der Längsschrägstellung der Verschiebelade 5 für die automatische Zuführung des Holzes 2 zur Sägeeinheit 3 mit rotierendem Sägeblatt 31 ganz wesentliche Merkmal der vorliegenden Erfindung, nämlich den mit dem Längsanschlag 51 für das Holz 2 fix gekoppelten und mit ihm daher automatisch immer mit-verstellbaren Sensor 7, der imstande ist, sofort zu erkennen, wenn das zugeführte Holz in Folge der Schrägstellung der Verschiebelade 5 allein durch die Schwerkraftwirkung und ohne sonstige weitere Kontrolle sicher bis zum Längsanschlag 51 "rutscht" und dort ansteht.

In diesem Moment wird mittels der mit dem Sensor 7 verbundenen Steuerungseinrichtung 9 dafür gesorgt, dass die Antriebshydraulik 55 die Verschiebelade 5 und mit ihr das Holz 2 zum Sägeblatt 31 der Sägeeinheit 3 hin in Richtung r1 bewegt, dessen Widia-Zähne das Holz 2 zu schneiden beginnen und diese Bewegung r1 so lange fortführt, bis das so abgesägte und exakt abgelängte Holzstück 2' nach abwärts, also konkret auf das Förderband 6 der Holzstück-Abtransportseinrichtung fällt und wegtransportiert wird.
Nach erfolgtem Schnitt wird automatisch die Lade 5 zurück in die Ausgangsposition Au bewegt.

In dem Augenblick, zu dem dies erfolgt ist, lockert das - nicht gezeigte - Holzhalterungselement der Lade 5 und das zu zerschneidende Langholz 2 rutscht bis zum Längsanschlag 51 vor, der Sensor 7 stellt Vorhandensein von Holz 2 in der Verschiebelade 5 fest und veranlasst die Ladenbewegungshydraulik 55, die Lade 5 mit dem von deren Halterungselement wieder gehaltenen Langholz 2 wieder in Richtung r1 zu bewegen und so fort.

Gelangt kein Holz 2 mehr in die Verschiebelade 5 - wird also vom Sensor 7 Nicht-Vorhandensein von Holz 2 festgestellt - so kehrt die Lade 5 in ihre Ausgangsstellung Au zurück und bleibt dort so lange, bis wieder Langholz 2 bis zum Längsanschlag 51 hin in die Lade 5 rutscht, oder aber es wird in diesem Fall von der Schneidvorrichtung 1 beispielsweise ein Signalton oder Lichtsignal abgegeben oder aber die Sägeeinheit 3 und der Antrieb 55 der oszillierenden Lade 5 wird abgeschaltet.

## Patentansprüche

1. Vorrichtung zum Schneiden von länglichem Holz (2), insbesondere von Scheit- oder Rundholz, in Holzstücke (2') jeweils definierter Länge (I), welche eine orts- und lagefest an die Vorrichtung (1) gebundene Sägeeinheit (3) und eine Holzzuführeinheit (4) mit parallel zur Schneidebene (30) der Sägeeinheit (3) oszillierend in deren Schneidbereich hinein und aus demselben heraus bewegbarer Holz-Halte- und - Verschiebelade (5), und vorzugsweise eine Abtransporteinrichtung (6) für die abgelängten Holzstücke (2'), insbesondere ein Förderband, umfasst, **dadurch gekennzeichnet,**
- **dass** sie eine mittels Antriebseinheit (55), vorzugsweise Hydraulikzylinder, im Wesentlichen horizontal quer oszillierend bewegbare Einheit (4, 5) von Holz-Zuführung (4) und an sie angeschlossener, mit ihr einheitlicher bzw. einstückiger, Holz-Halte- und
- Verschiebelade (5) für einen schwerkraftbewirkten Vorschub der Hölzer (2) bis zu einem Längsanschlag (51) derselben aufweist - welche in Längs- und Zufuhrrichtung (r2) der eingebrachten Hölzer (2) schräg, vorzugsweise in einem Winkel α von 25 bis 50°, insbesondere von 30 bis 40°, zur Horizontale H angeordnet ist, wobei die Schneidebene (30) der Sägeeinheit (3) im Wesentlichen senkrecht hierzu und zur Holzzufuhr-Längsrichtung (R2) positioniert ist, und
- **dass** der für die Einstellung des Ablängmaßes (I) der Holzstücke (2'), vorzugsweise diskontinuierlich, verstellbare Längsanschlag (51) fix mit einem die Beladung der Holz-Halte- und -Verschiebelade (5) kontrollierenden Sensor (7) gekoppelt ist,
- der seinerseits mit einer Steuerungseinrichtung (8) zumindest für die Antriebseinheit (55) der Holz-Halte- und -Verschiebelade (5) verbunden ist, mittels welcher
- bei Vorhandensein von Holz (2) in der genannten Lade (5) und dessen Anliegen an deren Längsanschlag (51), dieselbe zuerst senkrecht zur Schneidebene (30) des Sägeblatts (31) und für den Schnitt im Wesentlichen horizontal in Richtung (r1) auf das Sägeblatt (31) der Sägeeinheit (3) hin und nach erfolgtem Schnitt in die Gegenrichtung (r2) wieder zurück in die Ausgangsposition (Au) für das Nachrücken des Holzes (2) bis zum Längsanschlag (51) und dies horizontal oszillierend so lange, bis bei vom Sensor (7) registriertem Nicht-Vorhandensein von Holz (2) in der Lade (5) dieselbe in ihre Ausgangsposition (A) zurück bewegbar ist, und sie und/oder die Sägeeinheit (3) abschaltbar ist.

2. Vorrichtung nach Anspruch 1, **dadurch gekennzeichnet, dass** die Sägeeinheit (3) mit einer Kreis- oder Bandsäge, einer Stichsäge, einem Endlossägedraht oder einer Kettensäge, vorzugsweise mit einem Kreissägeblatt, ausgebildet ist.

3. Vorrichtung nach Anspruch 1 oder 2, **dadurch gekennzeichnet, dass** sie als Sensor (7) einen mit dem verstellbaren Längsanschlag (51) der Verschiebelade (5) mechanisch fix gekoppelten, mit sichtbarem oder infrarotem Licht oder Laserlicht arbeitenden optischen, einen kapazitiven oder Ultraschall-Sensor oder aber einen Berührungssensor aufweist.

4. Vorrichtung nach einem der Ansprüche 1 bis 3, **dadurch gekennzeichnet, dass** die Sägerichtung bzw. Sägewirkung von deren Sägeeinheit (3), insbesondere von deren Sägeblatt (31), von oben nach unten, also nach abwärts hin, verläuft.

5. Vorrichtung nach einem der Ansprüche 1 bis 4, **dadurch gekennzeichnet, dass** sie mittels Dreipunkt an einen Traktor koppelbar ist oder selbst als verfahrbarer Anhänger ausgebildet ist, und der Antrieb der Verschiebelade und/oder der Sägeeinheit (3) mittels der Arbeits- bzw. Gelenkswelle eines Schleppfahrzeugs, insbesondere Traktors, oder aber mittels Elekto- oder Verbrennungsmotor, vornehmbar ist.
